# EUROPÄISCHE PATENTANMELDUNG

(11) **EP 2 509 034 A1**
(43) Veröffentlichungstag der Anmeldung: **10.10.2012**
(21) Anmeldenummer: 11002995.6
(22) Anmeldetag: 09.04.2011
(51) Int. Cl.: G06Q 10/00, G06Q 30/00

(54) **Verfahren zum Erstellen von individuellen Regalbildern für verschiedene Verkaufsstellen**

(71) Anmelder: Hoffrogge Consulting Company GmbH, 27793 Wildeshausen (DE)
(72) Erfinder: Amelmann, Maik, 27793 Wildeshausen (DE); Oltmann, Stefan, 27793 Wildeshausen (DE); Hoffrogge, Wilhelm, 27793 Wildeshausen (DE)
(74) Vertreter: Siemons, Norbert

(57) **Zusammenfassung**

Verfahren zum Betreiben einer Datenverarbeitungsanlage gemäß einem Programm zum Erstellen von individuellen Regalbildern für eine Vielzahl verschiedener Verkaufsstellen eines Handelsunternehmens, bei dem
• das Programm auf Sortimentsdaten zugreift, die für jede Verkaufsstelle ein individuelles Sortiment aus verschiedenen Artikeln mit zugehörigen Attributen definieren,
• das Programm einem Anwender interaktiv verschiedene Blöcke zu definieren, die jeweils einen oder mehrere Artikel mit mindestens einem für den Block spezifischen Attribut umfassen,
• das Programm auf Regaldaten mit den individuellen Daten mindestens eines Regals jeder Verkaufsstelle zugreift,
• das Programm dem Anwender eine interaktive Erstellung einer sequentiellen Reihenfolge von Platzierungsregeln anbietet, die die Platzierung verschiedener Blöcke in Regalen betreffen, und
• das Programm nach erfolgter Definition von Blöcken und Erstellung der Reihenfolge von Platzierungsregeln für jede Verkaufsstelle nacheinander die Platzierungsregeln entsprechend ihrer Reihenfolge auf die Blöcke mit den Artikeln aus dem Sortiment der Verkaufsstelle anwendet und unter Berücksichtigung der Regaldaten die Stellplätze der verschiedenen Artikel in dem Regal der Verkaufsstelle ermittelt und in einem Regalbild darstellt.

## Beschreibung

Die Erfindung betrifft ein Verfahren zum Betreiben einer Datenverarbeitungsanlage gemäß einem Programm zum Erstellen von individuellen Regalbildern für eine Vielzahl verschiedener Verkaufsstellen eines Handelsunternehmens.

Die Regale in Verkaufsstellen von Handelsunternehmen werden mittels Regalbildern (auch "Planogramme" genannt) bestückt. Ein Regalbild ist eine Darstellung eines mit verschiedenen Artikeln bestückten Regals. Das Regalbild gibt die Anzahl Regalböden und ggfs. Segmente des Regals wieder. Ferner sind die Proportionen des Regals realistisch abgebildet. Die Artikel sind so dargestellt, dass sie vom Betrachter identifizierbar sind. Meist sind Regalbilder photorealistische Graphiken. Sie dienen dem Personal in den Verkaufsstellen als Vorlage für die Bestückung der Regale. Die verschiedenen Artikel werden entsprechend dieser Vorlage in das Regal eingestellt. Dies gilt sowohl für die vollständige Bestückung des Regals als auch für das Nachfüllen nach teilweiser Entleerung. Beim Erstellen eines Regalbildes wird das anzubietende Sortiment auf das jeweilige Regal unter Berücksichtigung seiner speziellen Abmessungen, Anzahl Regalböden, Regalhöhen und Segmente und der unterschiedlichen Nachfrage nach verschiedenen Artikeln sowie der unterschiedlichen Attraktivität der Standplätze im Regal verteilt.

Bei einem bekannten Computerprogramm für das Erstellen von Regalbildern wird für ein konkretes Regal mittlerer Größe vom Anwender durch Einzelfestlegung der Position und Anzahl jedes Artikels ein Mutterplanogramm erzeugt. Dieses Mutterplanogramm dient als Vorlage für die Erzeugung von weiteren Regalbildern für weitere Regale mit abweichenden Abmessungen in derselben oder anderen Verkaufsstellen. Von dem Mutterplanogramm werden Derivate erzeugt, die an die Verhältnisse der jeweiligen Regale angepasst sind. Hierfür wird offenbar die Anzahl der Artikel gleicher Art, die in der vordersten Front des Regals stehen, entsprechend den Größenverhältnissen des Regals, für das das Mutterplanogramm erstellt wurde und des Regals, für das das Derivat erzeugt wird, umgerechnet.

Die Erstellung des Mutterplanogramms und der Derivate ist aufwendig. Die Derivate müssen regelmäßig manuell korrigiert werden, weil die Umrechnung nicht zu passgenauen Ergebnissen führt. Außerdem ist nachteilig, dass die Ableitung von Derivaten von einem Mutterplanogramm standortspezifischen Besonderheiten nicht gerecht wird. Viele Artikel werden nämlich je nach Standort der Verkaufsstellen in sehr verschiedene Maße nachgefragt. Die Abhängigkeit der Nachfrage ist wiederum stark von der Produktkategorie abhängig. Bei Waschmitteln ist beispielsweise die Abhängigkeit der Nachfrage vom Standort der Verkaufsstelle nur gering. Bei Getränken, insbesondere bei Bier, ist jedoch die Abhängigkeit des Absatzes bestimmter Artikel vom jeweiligen Standort stark ausgeprägt. Dem wird durch aufwendige Nachbearbeitung der Derivate von Hand Rechnung getragen. Sowohl das Erstellen eines Mutterplanogramms als auch das Erstellen der Derivate nimmt erhebliche Zeit in Anspruch, die jeweils im Bereich eines ganzen Arbeitstages angesiedelt sein kann.

Davon ausgehend liegt der Erfindung die Aufgabe zugrunde, ein Verfahren zum Erstellen von individuellen Regalbildern für verschiedene Verkaufsstellen zur Verfügung zu stellen, das schneller ausführbar ist und die Berücksichtigung unterschiedliche Nachfrage nach Artikeln an verschiedenen Verkaufsstellen erleichtert.

Die Aufgabe wird durch ein Verfahren mit den Merkmalen von Anspruch 1 gelöst. Vorteilhafte Ausgestaltungen des Verfahrens sind in Unteransprüchen angegeben. Das erfindungsgemäße Verfahren zum Betreiben einer Datenverarbeitungsanlage gemäß einem Programm zum Erstellen von individuellen Regalbildern für eine Vielzahl verschiedener Verkaufsstellen eines Handelsunternehmens umfasst folgende Schritte:
- Das Programm greift auf Sortimentsdaten zu, die für jede Verkaufsstelle ein individuelles Sortiment aus verschiedenen Artikeln mit zugehörigen Attributen definieren,
- das Programm bietet einem Anwender an, interaktiv verschiedene Blöcke zu definieren, die jeweils einen oder mehrere Artikel mit mindestens einem für den Block spezifischen Attribut umfassen,
- das Programm greift auf Regaldaten mit den individuellen Daten mindestens eines Regals jeder Verkaufsstelle zu,
- das Programm bietet dem Anwender eine interaktive Erstellung einer hierarchischen Reihenfolge von Platzierungsregeln an, die die Platzierung verschiedener Blöcke in Regalen betreffen, und
- das Programm wendet nach erfolgter Definition von Blöcken und Erstellung der Reihenfolge von Platzierungsregeln für jede Verkaufsstelle nacheinander die Platzierungsregeln entsprechend ihrer Reihenfolge auf die Blöcke mit den Artikeln aus dem Sortiment der Verkaufsstelle an und ermittelt unter Berücksichtigung der Regaldaten die Stellplätze der verschiedenen Artikel in dem Regal der Verkaufsstelle und stellt diese in einem Regalbild dar.

Bei dem erfindungsgemäßen Verfahren greift das Programm auf Sortimentsdaten der zu optimierenden Warengruppe (d.h. die Gesamtheit von aus Verbrauchersicht substituierbaren Produktalternativen für die Befriedigung eines Bedürfnisses - z.B. Kategorie "Waschmittel" Verbraucherbedürfnis "Wäsche waschen") zurück. Diese Sortimentsdaten umfassen sämtliche Artikel, die in den verschiedenen Verkaufsstellen eines Handelsunternehmens verkauft werden. Ferner umfassen die Sortimentsdaten für jeden Artikel die jeweils zugehörigen Attribute. Hierbei handelt es sich beispielsweise um eines oder mehrere der nachfolgenden Attribute: Art, Hersteller, Marke, Menge, geographische Herkunft, Farbe, Größe, Verpackungstyp und andere Eigenschaften des Artikels. Die Sortimentsdaten bestimmen für jede Verkaufsstelle, für die das Verfahren Regalbilder erstellt, das individuelle Sortiment. Die Sortimentsdaten werden beispielsweise aus für ein größeres Absatzgebiet ermittelten Marktforschungsdaten zu den Artikeln des Sortiments eines Handelsunternehmens und aus den individuellen Absatzdaten der verschiedenen Verkaufsstellen des Handelsunternehmens gewonnen. Die Marktforschungsdaten werden mit den individuellen Absatzdaten der Verkaufsstellen verknüpft, um das individuelle Sortiment der Verkaufsstellen zu ermitteln. Damit das Programm auf die Sortimentsdaten zugreifen kann, können die Sortimentsdaten in einem Datenspeicher gespeichert werden, auf den das Programm Zugriff hat.

Ferner bietet das Programm einem Anwender an, interaktiv Blöcke zu definieren, die jeweils einen oder mehrere Artikel mit mindestens einem für den Block spezifischen Attribut umfassen. Das Definieren eines Blocks kann in einer komplett neuen Zusammenstellung von Artikeln zu einem Block oder in der Zuordnung von mindestens einem weiteren Artikel zu einem bereits vorher definierten Block bestehen. Die Blöcke umfassen jeweils Artikel mit einem Attribut, das für den jeweiligen Block spezifisch ist. Artikel aus anderen Blöcken weisen dieses Attribut nicht auf. Das Definieren der Blöcke wird durch die Attribute unterstützt bzw. vereinfacht und ist somit regelbasiert. Dies ermöglicht es beispielsweise dem Anwender, spezifische Blöcke zu bilden, deren Besonderheit darin besteht, dass sie Artikel derselben Art, desselben Herstellers, derselben Marke, derselben Menge, derselben geographischen Herkunft, derselben Farbe, derselben Größe, desselben Verpackungstyps oder Artikel mit anderen gleichen Eigenschaften sind. Ein Block kann auch durch mehrere gleiche Eigenschaften von darin enthalten Artikeln spezifiziert sein. Die vom Anwender definierten Blöcke mit Artikeln mit mindestens einem spezifischen Attribut können in einem Datenspeicher gespeichert werden, auf den das Programm Zugriff hat.

Zudem greift das Programm auf Regaldaten mit den individuellen Daten der Regale der verschiedenen Verkaufsstellen zu. Diese individuellen Daten umfassen beispielsweise die Abmessungen der Regale, die Anzahl der Regalböden, die Länge, die Tiefe und die Höhe der Regalböden und die Anzahl Segmente des Regals. Das Programm kann auf Regaldaten einer oder mehrerer Regale derselben Verkaufsstelle zugreifen. Die Regaldaten können in den Verkaufsstellen ermittelt bzw. vom Handelsunternehmen zur Verfügung gestellt werden. Sie können in einem Datenspeicher gespeichert werden, auf den das Programm Zugriff hat.

Ferner verwendet das Programm Platzierungsregeln, die in einer sequentiellen Reihenfolge geordnet sind. Die Platzierungsregeln geben dem Programm vor, nach welchen Regeln (z.B. wo bzw. in welcher Abfolge) die verschiedenen Blöcke in den Regalen zu platzieren sind. Die Platzierungsregeln können sich auf die Platzierung der Artikel in den Blöcken erstrecken. Die Erstellung der sequentiellen Reihenfolge von Platzierungsregeln wird vom Anwender interaktiv vorgenommen. Diese Tätigkeit kann auf die Festlegung der Reihenfolge vorgegebener Platzierungsregeln beschränkt sein. Ferner kann diese Tätigkeit die Vervielfältigung bzw. Änderung vorgegebener Platzierungsregeln umfassen. Sie kann die Definition von Platzierungsregeln durch den Anwender umfassen.

Eine oder mehrere Platzierungsregeln sind beispielsweise ausgewählt aus Regeln, die die Platzierung der Blöcke in einem Regal mit standardisierten Abmessungen betreffen, anstatt in einem Regal mit individuellen Regaldaten. Ferner können sie die Platzierung von bestimmten Blöcken auf einem bestimmten Regalboden, auf einer bestimmten Position eines Regalbodens und in einem bestimmten Regalsegment vorgeben. Des Weiteren können die Platzierungsregeln eine Platzierung von Blöcken oder Artikeln in einer bestimmten Richtung in einer vorgegebenen Reihenfolge vorgeben. Die Reihenfolge kann eine alphabetische Reihenfolge sein, die sich insbesondere auf den Namen des Herstellers oder die Marke des Artikels beziehen kann. Ferner können die Platzierungsregeln die Platzierung in einer durch mindestens eine Abmessung und/oder das Gewicht und/oder die Menge und/oder den Preis bestimmten Reihenfolge vorgeben. Des Weiteren können Platzierungsregeln die Platzierung der Artikel in einer für bestimmte Arten von Artikeln vorgegebenen Reihenfolge oder in einer für Gruppen verschiedener Artikel vorgegebenen Reihenfolge festlegen. Des Weiteren können Platzierungsregeln die Einhaltung von bestimmten Freiräumen und/oder von Platzhaltern an bestimmten Positionen des Regals betreffen. Weitere Platzierungsregeln können Regeln, Plätze des Regals aufzufüllen sein, die nach Anwendung der übrigen Platzierungsregeln leer bleiben. Ferner können Platzierungsregeln die Platzierung eines neu in das Sortiment des Handelsunternehmens eingeführten Artikels, auf einer bestimmten Position des Regals vorgeben.

Die Platzierungsregeln können in einem Datenspeicher gespeichert werden, auf den das Programm Zugriff hat.

Nach Ordnung von Artikeln des Sortiments in Blöcke und nach Erstellung der Reihenfolge von Platzierungsregeln für sämtliche Verkaufsstellen erzeugt das Programm individuelle Regalbilder. Hierfür arbeitet das Programm für jede Verkaufsstelle nacheinander die Platzierungsregeln entsprechend ihrer Reihenfolge ab. Hierbei wird jede Platzierungsregel aus der hierarchischen Reihenfolge von Platzierungsregeln auf die Blöcke angewendet. Unter Berücksichtigung der Regaldaten werden die Stellplätze der verschiedenen Blöcke und damit der darin enthaltenen Artikel für das Regal der jeweiligen Verkaufsstelle ermittelt und in einem Regalbild dargestellt. Ggfs. werden die Regalbilder für mehrere Regale derselben Verkaufsstelle ermittelt, wobei die individuellen Regaldaten des jeweiligen Regals zugrundegelegt werden. Das Verfahren ordnet dem Regal jeder Verkaufsstelle ein individuelles Regalbild zu, weil in den Blöcken nur die Artikel berücksichtigt werden, die zum Sortiment der Verkaufsstelle gehören. Zudem werden bei der Erstellung der Regalbilder die individuellen Daten des jeweiligen Regals der betreffenden Verkaufsstelle zugrunde gelegt. Die Regalbilder können für die Bestückung von Regalen - vorzugsweise farbig - ausgedrückt und/oder auf einem Display eines tragbaren Anzeigegeräts angezeigt werden.

Mit "interaktiv" ist in dieser Anmeldung eine Arbeitsweise bezeichnet, bei der der Anwender mit der Datenverarbeitungsanlage im Dialog kommuniziert. Bei diesem Dialogbetrieb der Datenverarbeitungsanlage ist es dem Anwender möglich, über Ein- und Ausgabegeräte im Wechsel von Frage und Antwort direkt mit der Datenverarbeitungsanlage Informationen und Daten auszutauschen. So erhält der Anwender insbesondere die Möglichkeit, im Dialogbetrieb Blöcke zu definieren und eine sequentielle Reihenfolge von Platzierungsregeln zu erstellen.

Das erfindungsgemäße Verfahren ermöglicht somit erstmals das Erstellen individueller Regalbilder für eine Vielzahl verschiedener Verkaufsstellen (d.h. verschiedener Einzelhandelsgeschäfte) in hoher Geschwindigkeit. Das Verfahren eignet sich insbesondere für das Erstellen von Regalbildern für die Regale von Einzelhandelsorganisationen, insbesondere von Lebensmittelketten, Drogeriemarktunternehmen, Mineralölgeschäften, die allesamt Handelsunternehmen im Sinne dieser Patentanmeldung sind.

Das Verfahren kann von vornherein vorsehen, dass das Programm auf die Sortimentsdaten eines einzigen Handelsunternehmenszugreift. Das Erstellen von Regalbildern eines Handelsunternehmens wird auch als "das Projekt" bezeichnet. Gemäß einer Ausgestaltung liegen dem Verfahren umfassendere Sortimentsdaten zugrunde, die die Sortimentsdaten mehrerer Verkaufsstellen (das Einzelhandelsgeschäft) eines Handelsunternehmens umfassen können. Bei dieser Ausgestaltung bietet das Programm dem Anwender an, interaktiv die Sortimentsdaten einer bestimmten Verkaufsstelle aus einer Sammlung von Sortimentsdaten auszuwählen. Die ausgewählten Sortimentsdaten können in einem Datenspeicher gespeichert werden, auf den das Programm Zugriff hat. Bei dieser Ausgestaltung kann das Verfahren Regalbilder für verschiedene Verkaufsstellen erstellen bzw. Erweiterungen des Sortiments einer Verkaufsstelle einfacher berücksichtigen.

Die Regalbilder können mehreren gleichen Artikeln mehrere Plätze in den vordersten Reihen des Regals (sog. "Facings") zuweisen. Bevorzugt werden besonders bei absatzstarken Artikeln mehrere Stellplätze in den vordersten Reihen des Regals zugeordnet. Gemäß einer Ausgestaltung umfassen die Sortimentsdaten die Angabe, wieviele Exemplare der jeweiligen Artikel in den vordersten Reihen des Regals anzuordnen sind. Diese Anzahl kann beispielsweise anhand der Absatzdaten der verschiedenen Artikel in den verschiedenen Verkaufsstellen festgelegt werden. Gemäß einer weiteren Ausgestaltung bietet das Programm dem Anwender die interaktive Festlegung der Anzahl jedes Artikels in den vordersten Reihen des Regals an. Der Anwender kann dann unter Berücksichtigung der Besonderheiten der Verkaufsstellen, aktueller Trends usw. festlegen, wieviele Exemplare jedes Artikels in den vordersten Reihen angeordnet werden sollen.

Gemäß einer weiteren Ausgestaltung umfassen die Sortimentsdaten für jede Verkaufsstelle das individuelle Sortiment aus verschiedenen Artikeln mit Daten zum Absatz und ermittelt das Programm die Anzahl jedes Artikels in den vordersten Reihen des Regals in Abhängigkeit vom Absatz und den Verkaufszeiten, für die der Regalbestand ausreichen soll, ohne dass das Regal wieder zu befüllen ist. Bei den Verkaufszeiten handelt es sich vorzugsweise um Zeiträume von einem bis mehreren Verkaufstagen. Dabei kann es sich aber auch um Bruchteile von Verkaufstagen bzw. von Öffnungszeiten einer Verkaufsstelle handeln. Die Anzahl der Artikel wird von dem Programm bevorzugt proportional zum Absatz ermittelt. In einem einfachen Fall ist der Zusammenhang zwischen der Anzahl jedes Artikels und dem Absatz linear.

Gemäß einer Ausgestaltung ordnet das Programm die von Anwender definierten Blöcke in Gruppen und stellt diese auf einem Bildschirm dar. Gemäß einer weiteren Ausgestaltung stellt das Programm die verschiedenen Blöcke auf einem Bildschirm in verschiedenen Farben dar. Gemäß einer weiteren Ausgestaltung bietet das Programm dem Anwender die interaktive Zuordnung einer individuellen Farbe zu jedem Block an und stellt die Blöcke auf einem Bildschirm in den vom Anwender gewählten Farben dar.

Für die Erstellung der Platzierungsregeln bietet das Programm dem Anwender gemäß einer Ausgestaltung abgespeicherte Platzierungsregeln und eine interaktive Bearbeitung der hierarchischen Reihenfolge und/oder der Inhalte der Platzierungsregeln an. Gemäß einer weiteren Ausgestaltung bietet das Programm dem Anwender die interaktive Definition eigener Platzierungsregeln an. Das Programm kann dem Anwender die interaktive Bearbeitung abgespeicherter Platzierungsregeln und die interaktive Definition eigener Platzierungsregeln anbieten.

Gemäß einer weiteren Ausgestaltung bietet das Verfahren dem Anwender die interaktive Änderung von Regalbildern an. Dies ermöglicht dem Anwender, die vom Programm durch Anwendung der Platzierungsregeln auf die Blöcke und die Regaldaten erstellten Regalbilder nachzubearbeiten. Beispielsweise kann die Platzierung einzelner Artikel, die in der Gesamtschau des Regalbildes unzweckmäßig erscheint, durch Nacharbeitung geändert werden.

Die Datenverarbeitungsanlage kann ein einzelner Computer oder ein Computernetzwerk sein.

Die Erfindung wird nachfolgend anhand der anliegenden Darstellungen eines Ausführungsbeispieles näher erläutert. In den Darstellungen zeigen:
- Fig. 1: einen Datenflussplan des erfindungsgemäßen Verfahrens;
- Fig. 2: einen Ausschnitt aus Sortimentsdaten;
- Fig. 3: einen Ausschnitt aus den Platzierungsregeln;
- Fig. 4: einen Ausschnitt aus den Sortimentsdaten geordnet in Blöcken;
- Fig. 5: einen Ausschnitt aus den in einer Reihenfolge angeordneten Platzierungsregeln;
- Fig. 6: einen Ausschnitt aus einer Übersicht von Verkaufsstellen, für die Planogramme erstellt wurden;
- Fig. 7: ein Planogramm vor der Nachbearbeitung;
- Fig. 8: das Planogramm nach der Nachbearbeitung;
- Fig. 9: das Planogramm in einer dreidimensionalen (3D-) Darstellung.

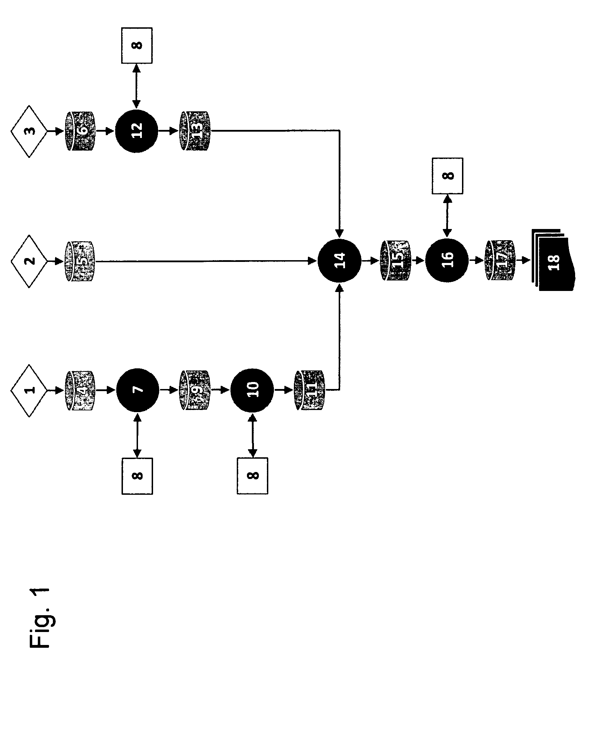

Gemäß Datenflussplan von Fig. 1 werden dem Verfahren über eine Schnittstelle 1 Sortimentsdaten, über eine Schnittstelle 2 Regaldaten und über eine Schnittstelle 3 Platzierungsdaten zugeführt. Diese Daten werden in Datenspeichern 4 für Sortimentsdaten, 5 für Regaldaten und 6 für Platzierungsregeln abgelegt.

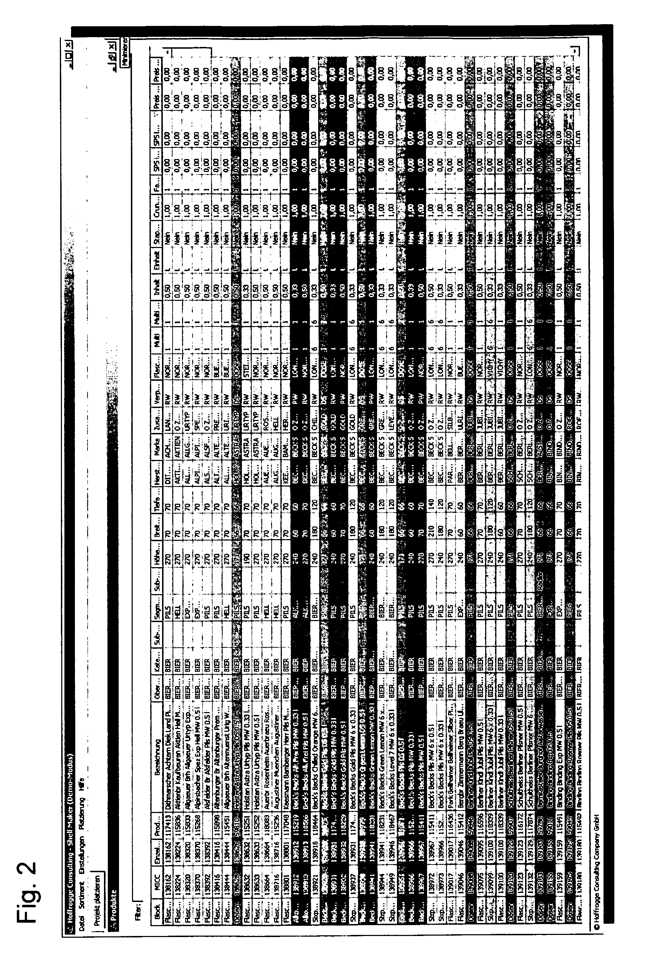

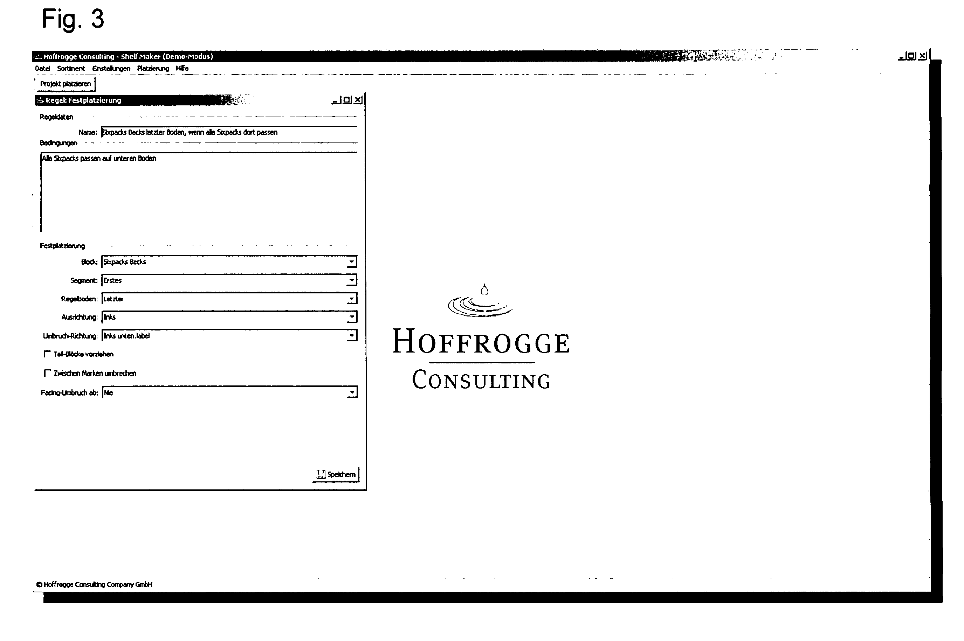

Fig. 2 zeigt einen Ausschnitt aus den Sortimentsdaten und Fig. 3 zeigt einen Ausschnitt aus den Platzierungsregeln.

Die Sortimentsdaten gehen über das Sortiment der Verkaufsstelle hinaus, für das Regalbilder erstellt werden sollen. Durch einen interaktiven Prozess 7 mit einer Schnittstelle 8 zum Anwender werden aus den Sortimentsdaten die Sortimentsdaten der betreffenden Verkaufsstelle selektiert und in einem Datenspeicher 9 abgespeichert.

In einem interaktiven Prozess 10 mit der Schnittstelle 8 zum Anwender werden die Sortimentsdaten des Handelsunternehmens aus dem Datenspeicher 9 zu Blöcken geordnet, die im Datenspeicher 11 abgespeichert werden. Die Blöcke umfassen einen oder mehrere Artikel mit einem gemeinsamen Attribut oder einer gemeinsamen Kombination von Attributen.

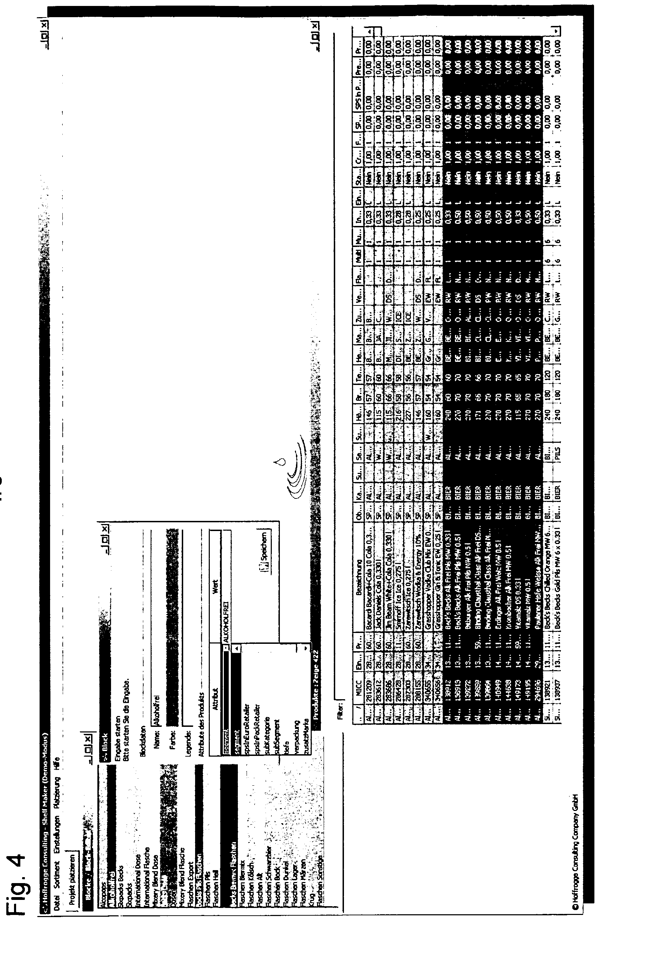

Fig. 4 zeigt einen Ausschnitt aus den zu Blöcken geordneten Sortimentsdaten.

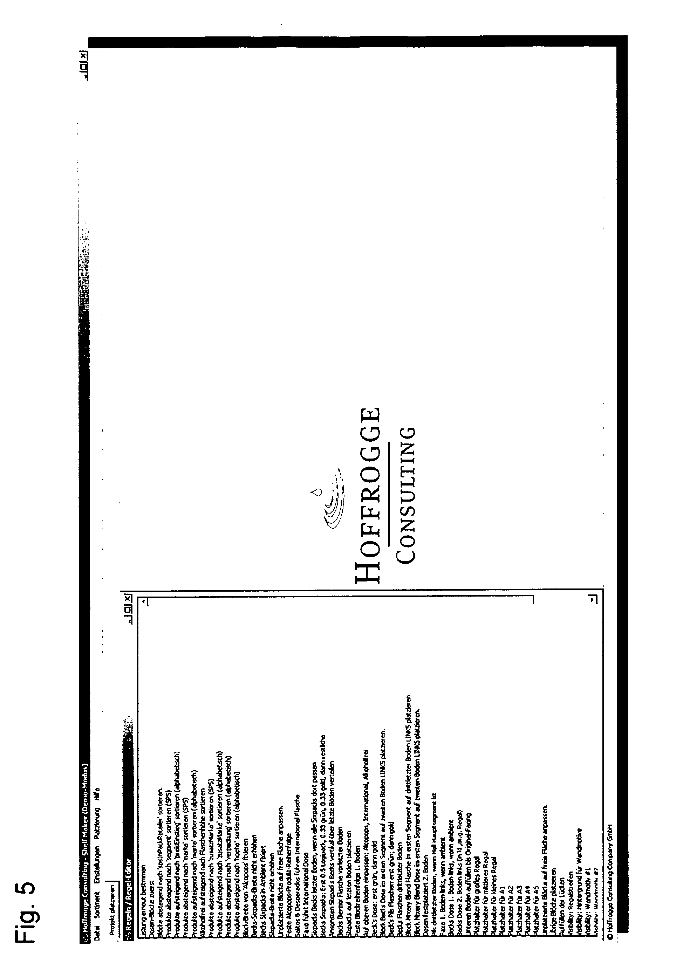

Die Platzierungsregeln aus dem Datenspeicher 6 werden in einem interaktiven Prozess 12 über die Schnittstelle 8 vom Anwender in eine bestimmte Reihenfolge gebracht. Dabei hat der Anwender die Möglichkeit, die Platzierungsregeln zu ändern oder eigene Platzierungsregeln zu definieren und die geänderten bzw. selbst definierten Platzierungsregeln in der Reihenfolge zu berücksichtigen. Die vom Anwender erstellte bzw. definierte Reihenfolge der Platzierungsregeln wird in einem Datenspeicher 13 gespeichert. Ein Ausschnitt aus den in eine bestimmte Reihenfolge gebrachten Platzierungsregeln ist in Fig. 5 gezeigt.

Die Blöcke aus dem Datenspeicher 11, die Regaldaten aus dem Datenspeicher 5 und die in eine bestimmte Reihenfolge gebrachten Platzierungsregeln aus dem Datenspeicher 13 werden in einem automatischen Rechenprozess 14 zu Regalbildern verarbeitet. Hierfür zieht der Rechenprozess 15 der Reihe nach jede Platzierungsregel heran und wendet diese auf die Blöcke und die Regaldaten eines bestimmten Regals einer Verkaufsstelle an. Auf diese Weise wird das betreffende Regal individuell mit Artikeln befüllt.

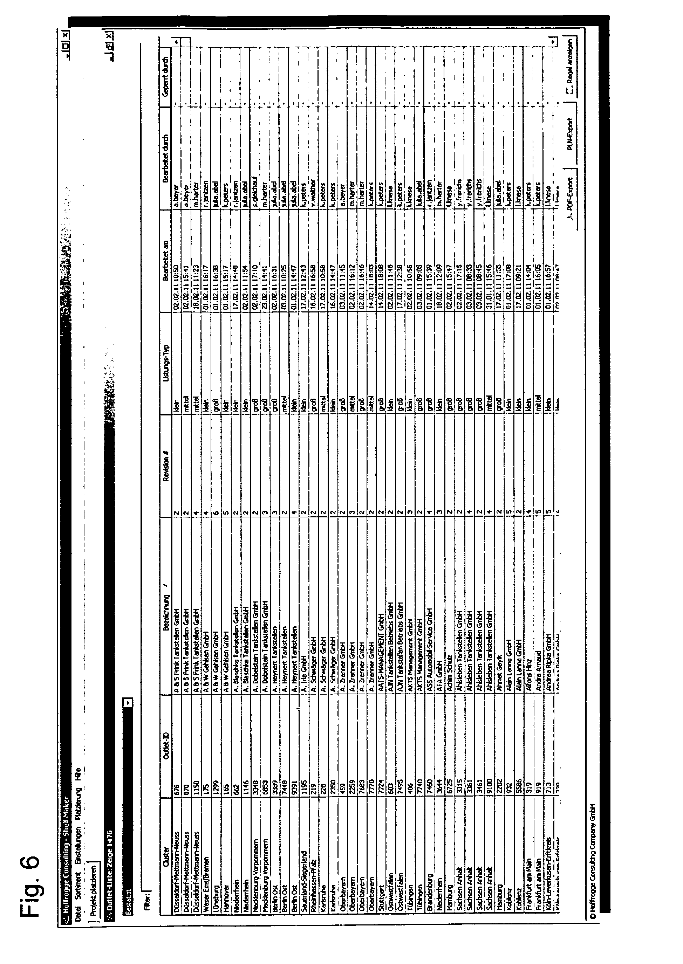

Der Prozess wird für sämtliche Verkaufsstellen des Handelsunternehmens durchgeführt. Ggfs. wird er für mehrere Regale jeder Verkaufsstelle durchgeführt. Die ermittelten Regalbilder werden im Datenspeicher 15 gespeichert. Ein Ausschnitt aus einer Übersicht von Verkaufsstellen, für die Regalbilder erstellt wurden, ist in Fig. 6 abgebildet.

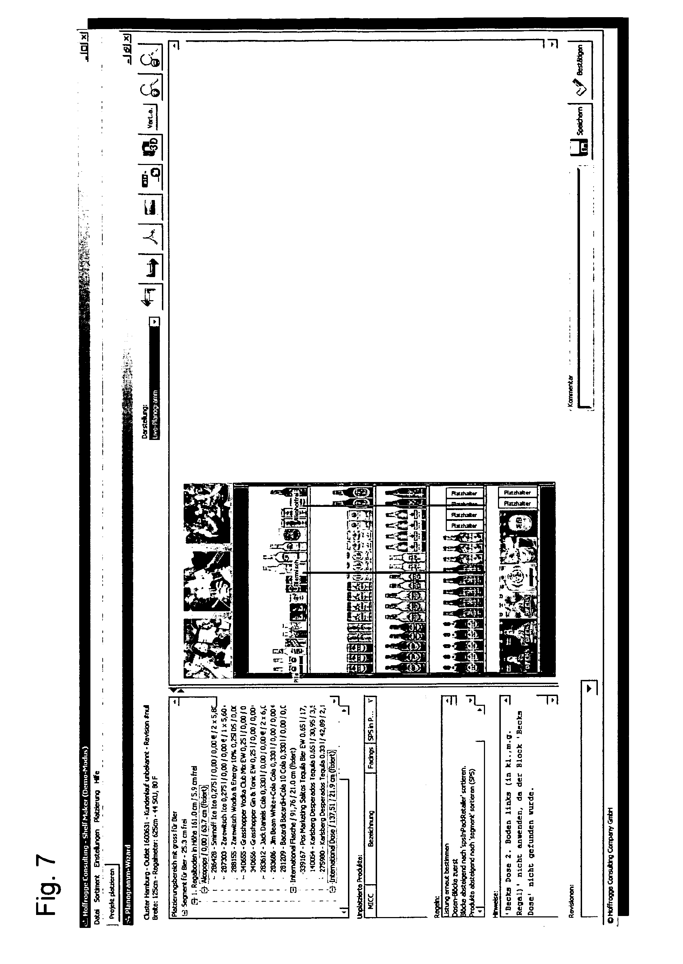

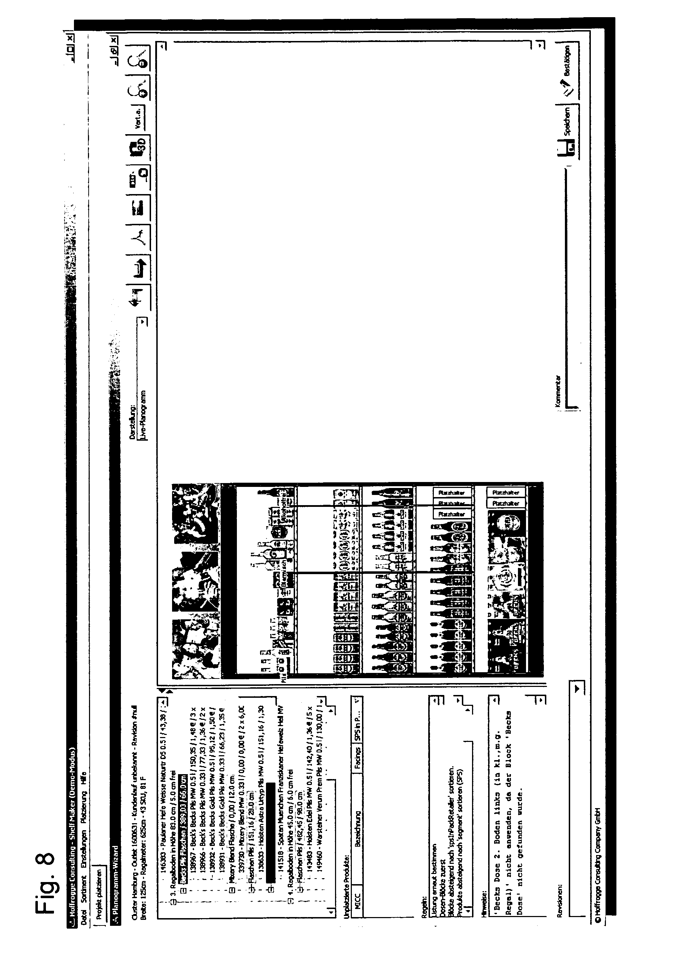

Die Regalbilder aus dem Datenspeicher 15 werden ggfs. in einem interaktiven Prozess 16 mit einer Schnittstelle 8 zum Anwender nachbearbeitet. Fig. 7 zeigt ein erstelltes Regalbild vor und Fig. 8 das Regalbild nach der Nachbearbeitung. Die nachbearbeiteten Regalbilder werden in einem Datenspeicher 17 abgespeichert und von einer Ausgabeeinrichtung 18 ausgegeben.

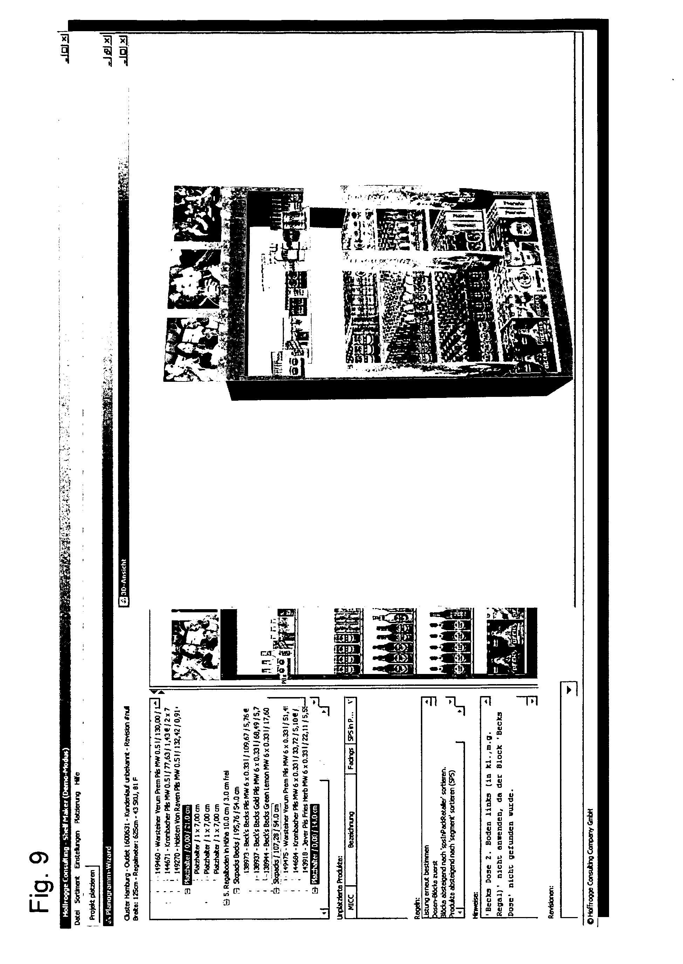

Fig. 9 zeigt eine 3D-Darstellung des Regalbildes, die ebenfalls durch das Programm erzeugt werden kann.

## Patentansprüche

1. Verfahren zum Betreiben einer Datenverarbeitungsanlage gemäß einem Programm zum Erstellen von individuellen Regalbildern für eine Vielzahl verschiedener Verkaufsstellen eines Handelsunternehmens, bei dem
• das Programm auf Sortimentsdaten zugreift, die für jede Verkaufsstelle ein individuelles Sortiment aus verschiedenen Artikeln mit zugehörigen Attributen definieren,
• das Programm einem Anwender interaktiv verschiedene Blöcke zu definieren, die jeweils einen oder mehrere Artikel mit mindestens einem für den Block spezifischen Attribut umfassen,
• das Programm auf Regaldaten mit den individuellen Daten mindestens eines Regals jeder Verkaufsstelle zugreift,
• das Programm dem Anwender eine interaktive Erstellung einer sequentiellen Reihenfolge von Platzierungsregeln anbietet, die die Platzierung verschiedener Blöcke in Regalen betreffen, und
• das Programm nach erfolgter Definition von Blöcken und Erstellung der Reihenfolge von Platzierungsregeln für jede Verkaufsstelle nacheinander die Platzierungsregeln entsprechend ihrer Reihenfolge auf die Blöcke mit den Artikeln aus dem Sortiment der Verkaufsstelle anwendet und unter Berücksichtigung der Regaldaten die Stellplätze der verschiedenen Artikel in dem Regal der Verkaufsstelle ermittelt und in einem Regalbild darstellt.

2. Verfahren nach Anspruch 1, bei dem das Programm dem Anwender anbietet, interaktiv die Sortimentsdaten eines bestimmten Handelsunternehmens aus einer umfangreicheren Sammlung von Sortimentsdaten auszuwählen.

3. Verfahren nach Anspruch 1 oder 2, bei dem das Programm dem Anwender die interaktive Festlegung der Anzahl jedes Artikels in den vordersten Reihen des Regals anbietet.

4. Verfahren nach einem der Ansprüche 1 bis 3, bei dem die Sortimentsdaten für jede Verkaufsstelle das individuelle Sortiment aus verschiedenen Artikeln mit Daten zum Absatz umfassen und das Programm die Anzahl jedes Artikels in den vordersten Reihen des Regals in Abhängigkeit vom Absatz und den Verkaufszeiten, für die der Regalbestand ausreichen soll, ohne dass das Regal wieder zu befüllen ist, ermittelt.

5. Verfahren nach einem der Ansprüche 1 bis 4, bei dem das Programm dem Anwender die interaktive Definition von Blöcken aus Artikeln mit gemeinsamen Attributen anbietet, wobei die gemeinsamen Attribute ausgewählt sind aus der Art, dem Hersteller, der Marke, der Menge, der geographischen Herkunft, der Farbe, der Größe, dem Verpackungstyp und anderen Eigenschaften des Artikels.

6. Verfahren nach einem der Ansprüche 1 bis 5, bei dem das Programm verschiedene Blöcke auf einem Bildschirm in verschiedenen Farben darstellt.

7. Verfahren nach einem der Ansprüche 1 bis 6, bei dem das Programm dem Anwender die interaktive Zuordnung einer individuellen Farbe zu jedem Block anbietet und die Blöcke auf einem Bildschirm in den vom Anwender gewählten Farben darstellt.

8. Verfahren nach einem der Ansprüche 1 bis 7, bei dem eine oder mehrere Platzierungsregeln ausgewählt sind aus Regeln, die die Platzierung in einem Regal mit standardisierten Abmessungen, von bestimmten Blöcken auf einem bestimmten Regalboden, auf einer bestimmten Position eines Regalbodens, in einem bestimmten Regalsegment, in einer bestimmten Richtung in einer vorgegebenen Reihenfolge, in alphabetischer Reihenfolge, in einer durch mindestens eine Abmessung und/oder das Gewicht und/oder die Menge und/oder den Preis bestimmten Reihenfolge, in einer für verschiedene Arten von Artikeln vorgegebenen Reihenfolge, in einer für Gruppen verschiedener Artikel vorgegebenen Reihenfolge, die Einhaltung von bestimmten Freiräumen und/oder Platzhaltern an bestimmten Positionen des Regals, das Auffüllen von leeren Plätzen und die Platzierung eines neu in das Sortiment aufgenommenen Artikels vorgeben.

9. Verfahren nach einem der Ansprüche 1 bis 8, bei dem das Programm dem Anwender abgespeicherte Platzierungsregeln und eine interaktive Bearbeitung der hierarchischen Reihenfolge und/oder Inhalte der Platzierungsregeln anbietet.

10. Verfahren nach einem der Ansprüche 1 bis 9, bei dem Platzierungsregeln die Abfolge verschiedener Artikel in den Blöcken betreffen.

11. Verfahren nach einem der Ansprüche 1 bis 10, bei dem das Programm dem Anwender die interaktive Definition eigener Platzierungsregeln anbietet.

12. Verfahren nach einem der Ansprüche 1 bis 11, bei dem das Programm dem Anwender die interaktive Änderung von Regalbildern anbietet.
